# EUROPEAN PATENT SPECIFICATION

(11) **EP 3 370 907 B1**
(45) Date of publication and mention of the grant of the patent: **23.12.2020**
(21) Application number: 15790523.3
(22) Date of filing: 02.11.2015
(51) Int. Cl.: B23D 35/00

(54) **A CUTTER FOR CUTTING A ROD**
EIN SCHNEIDWERKZEUG UM EINE STANGE ZU SCHNEIDEN
UNE LAME POUR COUPER UNE TIGE

(43) Date of publication of application: 12.09.2018
(73) Proprietor: R.M. Stampi S.r.l., 10080 Salassa (IT)
(72) Inventor: MAGNINO, Domenico, I-10080 Salassa (IT); ROSTAGNO, Gianpaolo, I-10080 Salassa (IT)
(74) Representative: Di Sciuva, Michele
(86) International application number: PCT/EP2015/075492
(87) International publication number: WO 2017/076424

(56) References cited:
- WO-A1-2010/145043
- DE-A1- 2 218 687
- DE-A1- 10 243 308
- GB-A- 2 074 491
- US-A- 4 341 264
- US-A- 5 142 779

## Description

### TECHNICAL FIELD

The present invention relates to a cutter for hot-cutting a rod, according to the preamble of claim 1. Such a cutter is known from the document WO 2010/145043 A1.

In particular, the present invention relates to a cutter for hot-cutting, i.e. cutting a temperature greater than 800 °C, a rod of steel.

### BACKGROUND ART

As it known, rods of steel are hot-cut in a plurality of elongated elements and at the temperature greater than 800 °C by making use of a cutting assembly.

In greater detail, the cutting assembly cuts the rods of steel along a first cutting axis, as the rods advance along a second advancing axis.

The cutting assembly essentially comprises a first and a second cutter which are slightly offset along the second advancing axis and are superimposed to one another along the first cutting axis.

Furthermore, the first cutter assembly is stationary with respect to the first cutting axis while the second cutter assembly can reciprocate with respect to the first cutter along the first cutting axis.

More precisely, the second cutter reciprocates between:
- a rest position, in which it is spaced apart from the rod and is set in the farther position from the first cutter along the first cutting axis; and
- an operative position, in which it contacts the rod and is set in the closer position from the first cutter along the first cutting axis.

The first and the second cutter substantially comprise, each,:
- a frame; and
- a cutting element, which is integral with the frame and defines a cutting edge.

The cutting edge of each first and second cutter is shaped as a semi-circumference arc open towards the other first and second cutter.

Due to the movement of the second cutter, the cutting assembly is cyclically set in:
- a closed configuration, in which the second cutter in the operative position, the seats of the first and the second cutter define a circular passage for the rod, and the cutting edges cut the rod at a transversal section thereof; and
- an open configuration, in which the second cutter is in the rest position, the cutting edges are spaced apart from one another and the rod can advance without being cut.

In particular, during the cutting operation, the cutting edges undergo very high temperature.

In the known solutions, the cutting element and the frame are formed in one piece, so as to ensure that the cutter preserves the proper value of solidity at the very high temperature at which the cutting edges operates.

Accordingly, every time that it necessary to replace the cutting edge, a replacement of the whole first or second cutter is also needed.

### DISCLOSURE OF INVENTION

It is an object of the present invention to provide a cutter for cutting rods, which is designed to eliminate this drawbacks connected with the known cutter in a straightforward, relatively low-cost manner.

The aforementioned object is achieved by the present invention as it relates to a cutter for cutting rods, as claimed in claim 1.

### BRIEF DESCRIPTION OF THE DRAWINGS

One preferred embodiment is hereinafter disclosed for a better understanding of the present invention, by way of non-limitative example and with reference to the accompanying drawings, in which:
- Figure 1 is an exploded perspective view of a cutter for cutting rods in accordance with the present invention;
- Figure 2 is a lateral view in an enlarged scale and with parts sectioned for clarity of a cutting assembly comprising a pair of cutters of the type shown in Figure 1;
- Figures 3 to 5 are lateral views, with part sectioned for clarity, of the cutting assembly of Figure 2 in respective consecutive operative steps; and
- Figure 6 is an enlarged view of the cutting assembly of Figures 2 to 5.

### BEST MODE FOR CARRYING OUT THE INVENTION

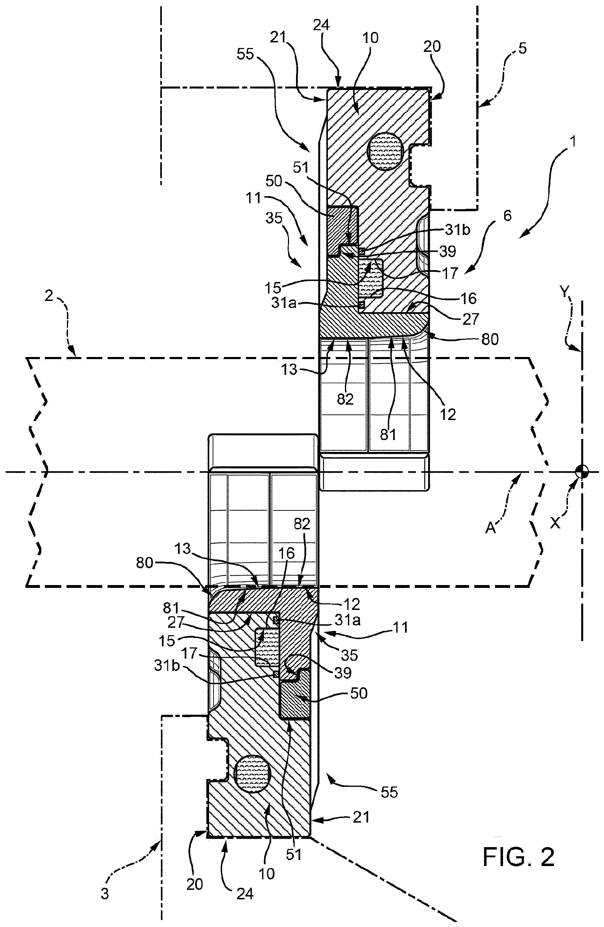

With reference to Figure 2 to 6, numeral 1 indicates as a whole a cutting assembly for cutting a rod 2.

In particular, cutting assembly 1 cuts rod 2 along an axis Y orthogonal to axis A, so as to form a cut element 7, which is detached from a remaining portion 8 of rod 2.

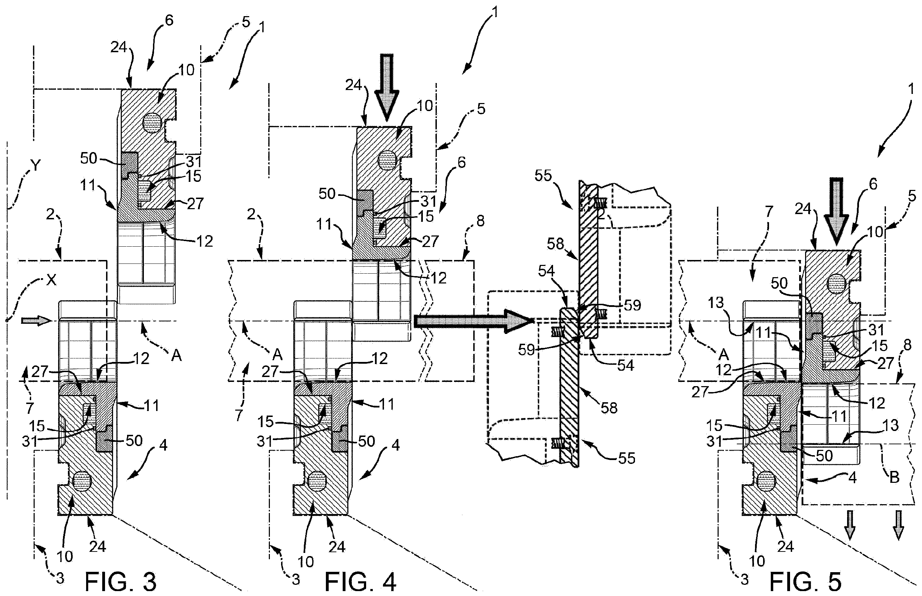

With reference to Figure 5, cut element 7 is advanced along an its own axis B, which is parallel to axis A.

Remaining portion 8 of rod 2 advances parallel to an axis A and has an its own axis parallel to axis A.

It is also possible to identify an axis X, which is orthogonal to axes A and Y.

In the embodiment shown, the cutting assembly is adapted to hot-cut, i.e. cutting a temperature greater than 800 °C, a rod of steel.

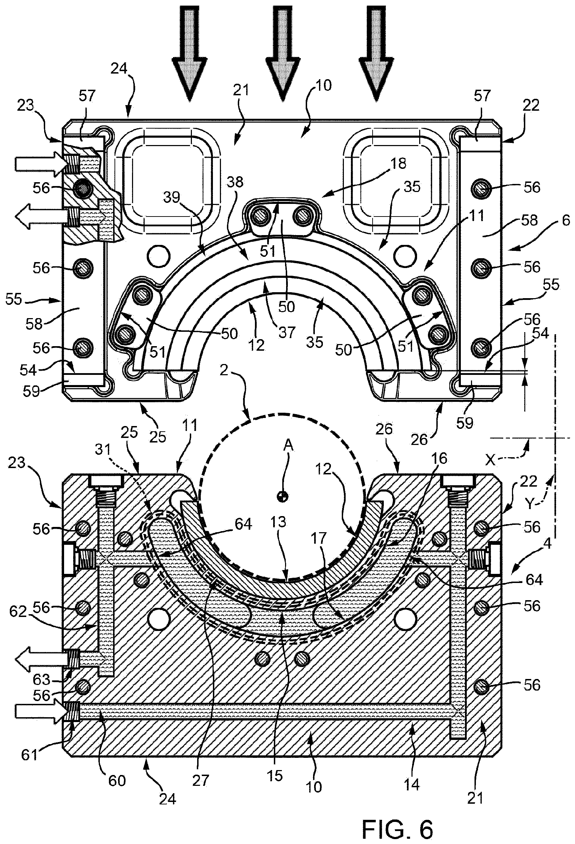

Cutting assembly 1 substantially comprises (Figures 2 to 5):
- a holder 3, which is stationary along axis Y;
- a cutter 4, which is fitted to holder 3 and is stationary about axis Y;
- a holder 5, which can move along axis Y towards and away from holder 3; and
- a cutter 6, which is fitted to holder 5 and movable together with holder 5 along axis Y towards and away from holder 5 between an rest position (Figure 4) and an operative position (Figure 6).

Furthermore, cutters 4, 6 are offset along axis A.

Rod 2 is advanced, in use, by not-shown means parallel to axis A and between cutter 4, 6.

Still more precisely, cutter 6 is arranged downstream of cutter 4, proceeding according the advancement sense of rod 2 parallel to axis A.

Furthermore, cutter 6 is set spaced apart from rod 2, when it is set in the rest position (Figure 4).

Differently, cutters 4 and 6 cooperate with one another to grip and cut rod 2, as cutter 6 is in the operative position (Figure 5).

Still more precisely, cutter 6 is in the closest position with respect to cutter 4 along axis Y, when it is set in the operative position.

Cutter 6 is in the farthest position with respect to cutter 4 and along axis Y, when it is set in the rest position.

Cutter 6 can also assume an intermediate position (Figure 4) along axis Y and between the rest position and the operative position.

In the following of the present description, only cutter 4 will be described, being cutter 6 identical to cutter 4.

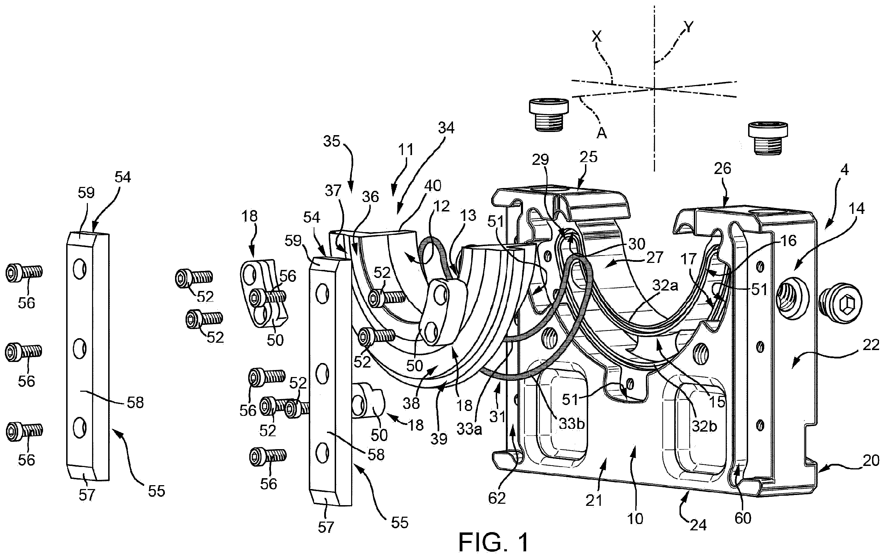

In greater detail, cutter 4 essentially comprises (Figures 1 and 6):
- a frame 10, which is fixed to holder 3;
- a cutting element 11, which is fixed to frame 10, comprises a curved cutting surface 12 and defines an open seat 13 bounded by surface 12; and
- a refrigerating circuit 14 for refrigerating surface 12 and defined by frame 10.

Refrigerating circuit 14 comprises a chamber 15, which is filled with a refrigerating fluid and is thermally coupled with cutting surface 12; chamber 15 is bounded by a wall 16, which is arc-shaped, extends on the opposite side of seat 13 with respect to axis Y and extends parallel to surface 12 in a cross section taken orthogonal to axis A.

It is important to stress that the expression "parallel" is used to indicate in the present description that wall 16 and surface 12 are curved and have substantially identical shapes.

Frame 10 is bounded by:
- according to the invention, a pair of walls 20, 21 which are opposite to each other and lie substantially on respective planes orthogonal to axis A;
- a pair of walls 22, 23, which are opposite to one another, extend between walls 20, 21 and lies on respective planes orthogonal to axis X;
- a wall 24, which lies on a plane orthogonal to axis Y and extends between walls 22, 23;
- a pair of walls 25, 26, which protrude from respective walls 22, 23, are separated from one another, extend on a plane orthogonal to axis Y and are opposite to wall 24; and
- a wall 27, which is opposite to wall 24 parallel to axis Y.

In particular, wall 27 extends between walls 25, 26 and defines seat 13.

Furthermore, wall 27 extends at first at progressively decreasing distances from wall 24 and then at progressively increasing distances from wall 24, proceeding from wall 25 to wall 26.

Wall 16 of chamber 15 and wall 27 of frame 10 extend substantially at a constant distance measured parallel to axis Y, proceeding from wall 24 to wall 25.

Chamber 15, which is C-shaped in a section taken in a plane orthogonal to axis Y.

Chamber 15 is bounded, parallel to axis Y, by:
- wall 16 on the side of seat 13; and
- wall 17 on the opposite side of seat 13.

In particular, wall 17 is interposed between wall 16 and wall 24 parallel to axis Y.

Wall 17 is arc-shaped and parallel to wall 16.

In the embodiment shown, walls 16, 17 are symmetrical with respect to a mid-plane of wall 24, which extends orthogonal to axis X.

Chamber 15 is closed by wall 20 on one side parallel to axis A and is closed, on the side of wall 21 by cutting element 11, as it will be clear in the following of the present description.

Walls 16, 17 are rounded to one another.

Wall 20 of frame 10 defines a slot 30, which surrounds an axial end 29 of chamber 15 and houses a seal 31.

Seal 31 is clamped between slot 30 and cutting element 11 and tight-fluid seals chamber 15.

Slot 30 has a closed contour, which surrounds axial end 29 of chamber 15 defined by wall 21.

Still more precisely, slot 30 comprises a pair of stretches 32a, 32b which are C-shaped and rounded to one another.

Seal 31 has a closed contour.

Seal 31 comprises a pair of stretches 33a, 33b which are housed in respective stretches 32a, 32b of slot 30.

According to the invention, cutting element 11 extends symmetrically about axis A and substantially comprises:
- a disk 35, which extends about an axis parallel to axis A;
- a pair of head surfaces 34, which protrude from an axial end of disk 35 along axis A, are spaced from one another along axis X, and lie on a plane parallel to axis Y; and a
- cutting surface 12, which extends between head surface 34, protrudes from disk 35 towards wall 20.

In greater detail, disk 35 comprises, proceeding radially to axis A and on the opposite radial direction to axis A,:
- a ring 36 orthogonal to axis A and defining an axial end of cutting surface 12;
- an edge 37 inclined with respect to axis A;
- a surface 38 orthogonal to axis A; and
- a surface 39 orthogonal to axis A.

Ring 36, edge 37, surface 38 and surface 39 are arranged in this sequence, proceeding parallel to axis A and in a direction oriented from wall 20 to wall 21.

Surfaces 34 comprise respective portions 40, which protrude from disk 35 on the side of wall 21 and along axis A.

Seat 13 is coaxial with axis A.

In the embodiment showm, seat 13 is C-shaped and extends for 180 degrees around axis A.

With particular reference to Figures 2 to 5, surface 39 of disk 35 closes chamber 15 on the opposite side of wall 21.

Furthermore, cutting surface 12 and wall 27 have the same length parallel to axis A.

The length of chamber 15 parallel to axis A is smaller than the length parallel to axis A of cutting surface 12 and wall 27.

In the embodiment shown, cutting surface 12 comprise, proceeding from wall 20 to wall 21:
- a rounded portion 80 converging towards axis A;
- a tapered portion 81 converging towards axis A; and
- a cylindrical portion 82 coaxial with axis A.

At least portion 82 of cutting surface 12 extends around axis A for 180 degrees.

Seal 31 is axially pressed between surface 39 of disk 35 and slot 30 of frame 10.

Furthermore, cutting surface 12 is superimposed parallel to axis A onto wall 27 of frame 10.

In particular, the distance between homologous - i.e. arranged at the same angular distances from a fixed direction and about axis A - points of walls 16, 27 measured radially to axis A is smaller than the distance measured radially to axis A between homologous points of walls 17, 16.

In other words, the height of chamber 15 measured radial to axis A is greater than the distance radial to axis A between walls 16, 27.

Finally, surfaces 34 are fitted to respective walls 25, 26 of frame 10.

Still more precisely, surfaces 34 are fitted to frame 10 below walls 25, 26.

Advantageously, cutting element 13 is distinct from and releasably connected to frame 10 by releasable connecting means 18.

Connecting means 18 comprise (Figures 1 and 6) a plurality, three in the embodiment shown, of brackets 50, which are arranged in respective seats 51 of wall 21 at angularly spaced positions with respect to axis A.

In greater detail, surface 39 is clamped parallel to axis A between brackets 50 and wall 21 of frame 10 (Figure 6).

Furthermore, brackets 50 abut against surface 39 of disk 35 parallel to axis A

In particular, brackets 50 are screwed to wall 21 of frame 10 by means of respective pair of screws 52.

Seats 51 are radially outer with respect to chamber 15 and with reference to axis A.

Cutter 4 further comprises according to the invention a pair of guides 55, which extend parallel to axis Y and are spaced apart from one another.

In particular, the depth of seats 51 parallel to axis A is smaller than the size of walls 22, 23 and, therefore, of frame 10 parallel to axis A.

Guides 55 are releasably fitted, according to the invention by means of screws 56, to respective sides of wall 21 on respective opposite sides of chamber 15.

In particular, guides 55 are arranged on opposite sides of brackets 50 with respect to chamber 15.

Each guide 55 comprises, according to the invention proceeding parallel to axis Y and from wall 24 of frame 10 to relative wall 25, 26 of frame 10:
- an end surface 57 sloped with respect to a plane orthogonal to axis A;
- a main surface 58, which is orthogonal to axis A; and
- an end surface 59 sloped with respect to the plane orthogonal to axis A.

Each guide 55 comprises an end 54, which separates relative surface 58 and surface 59.

End 54 is arranged on the opposite side of relative surfaces 34 with respect to relative surface 57, proceeding parallel to axis Y.

According to the invention, surfaces 58 of guides 55 of cutter 6 and corresponding surfaces 58 of guides 55 of cutter 4 are adapted to slide one over the other (Figure 6), when cutter 6 reaches the operative position, so as to avoid the interference between cutting surfaces 12 of cutters 4, 6.

Refrigerating circuit 14 comprises (Figure 6):
- an inlet duct 60 which extends from an inlet 61 for cold water defined by wall 23 to chamber 15; and
- an outlet duct 62 which extends from chamber 15 to an outlet 63 for hot water defined by wall 23.

Duct 60 comprises a first stretch orthogonal to axis A, Y, a second stretch parallel to axis Y and a third stretch orthogonal to axis A, Y, proceeding from inlet 61 to chamber 15.

Duct 62 comprises a first stretch orthogonal to axis A, Y, a second stretch parallel to axis Y and a third stretch orthogonal to axis A, Y, proceeding from chamber 15 to outlet 63.

Wall 17 of chamber 15 defines respective openings 64 opposite to another and symmetrical with respect to axis A and in fluidic connection with respective ducts 60, 62.

The first stretches of duct 60, 62 are covered by guides 55, when the latter are screwed on frame 10.

The operation of cutting assembly 1 is described starting from the configuration shown in Figure 2, in which cutter 6 is in the rest position, at which it is arranged at the maximum distance from cutter 4 along axis Y.

In the meanwhile, rod 2 is advanced along axis A at a temperature of more than 800 °C.

In order to cut rod 2 at an intermediate section thereof and along axis Y, cutter 6 is moved parallel to axis A at first in the intermediate position (Figure 4) and then in the final position (Figure 5).

When cutter 6 reach the final position (Figure 5), cutting surfaces 12 of cutters 4, 6 contact respective opposite halves of rod 2 at respective position offset along axis A, and cut rod 2 in two portions.

In greater detail, a half of remaining portion 8 of rod 2 is housed inside seat 13 of cutter 4 while a half of portion 7 of rod 2 is housed in seat 13 of cutter 6.

As portion 7 has been cut from remaining portion 8 of rod 2, it is moved away from cutter 4, 6 parallel to axis A and advanced parallel to axis B.

As cutter 6 moves parallel to axis Y towards cutter 4, surfaces 58 of guides 55 of cutter 6 slide according to the invention onto surfaces 58 of relative guides 55 of cutter 4, thus ensuring that cutting surfaces 12 of cutters 4, 6 do not interfere with one another (Figures 4 and 5).

Refrigerating circuits 14 are effective in refrigerating cutting surfaces 12 of cutter 4, 6 at very low temperature, for example 260 °C, during the cutting of rod 2.

In greater detail, the refrigerating fluid, cold water in the embodiment shown, enters inlet 61, flows along duct 62 and enters chamber 15 through relative opening 64.

The refrigerating fluid, thanks to the large exchange surface between wall 16 of chamber 15 and cutting surface 12, is effective to keep the temperature of cutting surface 12 at very low temperature, e.g. 280 °C, in comparison with the temperatures of rod 2.

The warmed up refrigerating fluid moves away from chamber 15 and reaches duct 62 through relative opening 64 of chamber 15.

Finally, the warmed up refrigerating fluid exits from cutters 4, 6 through relative outlet 63.

From an analysis of the features of cutter 4, 6 made according to the present invention, the advantages it allows to obtain are apparent.

In greater detail, cutter element 11 is a detached body from frame 10, thanks to the presence of connecting means 18.

Accordingly, cutter element 11 can be made by means of machining operation, for example by lathing or milling, thus rendering the manufacturing tolerances of cutting surface 12 particularly narrow and correspondingly increasing the precision and repeatibility of the cutting operation.

The above-identified machining operation can be used for manufacturing cutter element 11, also because the cutting surface 12 operates at a low temperature thanks to the conformation of chamber 15.

As a matter of fact, chamber 15 comprises a wall 16, which extends parallel to cutting surface 12 and is arranged underneath cutting surface 12.

Accordingly, the thermal exchange surface between chamber 15 and cutting surface 12 is particularly high, thus ensuring a very effective cool action on cutting surface 12.

As a result of the cooling action of the refrigerant liquid flowing inside chamber 15, the temperature of cutting surface 12 remains at about 280 °C during the cutting of rod 2.

## Claims

1. A cutter (4, 6) for hot-cutting a rod (2), preferably a rod (2) of steel, comprising:
- a frame (10);
- a cutting element (11), which is fitted to said frame (10), comprises an arc-shaped cutting surface (12) extending about a first axis (A), is adapted, in use, to cut said rod (2), and defines an open seat (13) bound by said cutting surface (12); and
- releasable connecting means (18) for releasably connecting said cutting element (11) and said frame (10); said connecting means (18) being also releasably connected to said frame (10);
said cutting element (11) comprising a radially external surface (39) and said frame (10) being bound by a first and a second wall (20, 21) which are opposite to each other and lie on respective planes orthogonal to said first axis (A);
**characterized in that** said cutting element (11) is axially clamped between said connecting means (18) and said frame (10) along said first axis (A);
said connecting means (18) comprising at least one bracket (50);
said second wall (21) axially bounding said frame (10) on the side of said cutting element (11);
said radially external surface (39) being axially clamped between said second wall (21) and said at least one bracket (50) along said first axis (A);
said cutter (4, 6) further comprising a pair of guides (55,) which extend spaced apart from one another;
said guides (55) being releasably fitted to respective sides of said second wall (21);
each said guide (55) comprising a relative main surface (58), which is orthogonal to said first axis (A) and is adapted to slide over a corresponding further surface (58) of a further guide (58) of a further cutter (6, 4), so as to avoid the interference between cutting surfaces (12) of said cutter (4, 6) and said further cutter (6, 4);
said cutting element (11) extending symmetrically about said first axis (A) and comprising:
- a disk (35), which extends about a further axis parallel to said first axis A;
- a pair of head surfaces (34), which protrude from an axial end of said disk (35) along said first axis (A), are spaced from one another along said second axis (X); said second axis (X) being orthogonal to said first axis (A) and
- said cutting surface (12), which extends between said head surfaces (34) and protrudes from said disk (35) towards said first wall (20);
said disk (35) comprising, proceeding radially to said first axis (A) and on the opposite radial direction to said first axis (A):
- a ring (36) orthogonal to said first axis (A) and defining an axial end of said cutting surface (12);
- an edge (37) inclined with respect to said first axis (A);
- an additional surface (38) orthogonal to said first axis (A); and
- said radially external surface (39) orthogonal to said first axis (A).

2. The cutter of claim 1, **characterized in that** said bracket (50) is screwed to said frame (10).

3. The cutter of claim 1 or 2, **characterized by** comprising at least three brackets (50), which are angularly equi-spaced about said first axis (A).

4. The cutter of any one of the foregoing claims, **characterized in that** said second wall (21) defines a seat (51) housing said bracket (50).

5. The cutter of claim 4, **characterized in that** said seat (51) has a length smaller than said frame (10) parallel to said first axis (A).

6. The cutter of any one of the foregoing claims, **characterized in that** said frame (10) defines a chamber (15), which is fillable with a refrigerating fluid and is thermally coupled with said cutting surface (12) for removing heat from said cutting surface (12);
said chamber (15) extending between said second wall (21) and a third wall (16) radially outer of said frame (10);
said seats (51) being arranged radially outer with respect to said chamber (15).

7. The cutter of claim 6, **characterized in that** said third wall (16) is arc-shaped, extends on the opposite side of said seat (13) with respect to said cutting surface (12) and along a third axis (Y), and extends parallel to said cutting surface (12) in a section taken along said first axis (A) transversal to said third axis (Y); said third axis (Y) being orthogonal to said first, second axes (A, X).

8. The cutter of any one of the foregoing claims, **characterized in that** said frame (10) comprises a fourth wall (24) which lies on a plane orthogonal to said third axis (Y), and a fifth wall (25) which lies on a plane orthogonal to said third axis (Y) and is opposite to said fourth wall (24);
each said guide (55) comprising, proceeding parallel to said third axis (Y), from said fourth wall (24) of said frame (10) to said fifth wall (25):
- a first end surface (57) sloped with respect to a plane orthogonal to said first axis (A);
- said main surface (58); and
- a second end surface (59) sloped with respect to said plane orthogonal to said first axis (A).

9. An assembly (1) for cutting a rod (2) comprising a first cutter (4) and a second cutter (6) according to any one of the foregoing claims;
said first cutter (4) and said second cutter (6) being movable relative to one another along said third axis (Y) and being arranged on the opposite side of said first axis (A) along which said rod (2) advances, in use;
said first cutter (4) and said second cutter (6) being offset parallel to said first axis (A).

## Patentansprüche

1. Schneidvorrichtung (4, 6) zum Heißschneiden einer Stange (2), bevorzugt einer Stange (2) aus Stahl aufweisend:
- einen Rahmen (10),
- ein Schneidelement (11), welches an dem Rahmen (10) angebracht ist, aufweisend eine bogenförmige Schneidfläche (12), die sich um eine erste Achse (A) erstreckt, die angepasst ist, bei Verwendung die Stange (2) zu schneiden und die einen offenen Sitz (13) definiert, der durch die Schneidfläche (12) begrenzt ist; und
- lösbare Verbindungsmittel (18) zum lösbaren Verbinden des Schneidelements (11) und des Rahmens (10); wobei die Verbindungsmittel (18) ebenfalls lösbar mit dem Rahmen (10) verbunden sind,
wobei das Schneidelement (11) eine radiale externe Oberfläche (39) aufweist und der Rahmen (10) von einer ersten und einer zweiten Wand (20, 21) begrenzt wird, welche gegenüber voneinander sind und in entsprechenden Ebenen orthogonal zu der ersten Achse (A) liegen
**dadurch gekennzeichnet,**
**dass** das Schneidelement (11) axial zwischen dem Verbindungsmittel (18) und dem Rahmen (10) entlang der ersten Achse (A) geklemmt ist;
**dass** die Verbindungsmittel (18) mindestens eine Klammer (50) aufweisen;
**dass** die zweite Wand (21) den Rahmen (10) auf der Seite des Schneidelementes (11) axial begrenzt;
**dass** die radiale externe Oberfläche (39) radial zwischen der zweiten Wand (31) und der mindestens einen Klammer (50) entlang der ersten Achse (A) geklemmt ist;
**dass** die Schneidvorrichtung (4, 6) des Weiteren aufweist ein Paar von Führungen (55), welche sich entfernt voneinander erstrecken;
**dass** die Führungen (55) lösbar an die entsprechenden Seiten der zweiten Wand (21) angebracht sind;
**dass** jede Führung (55) eine relative Hauptfläche (58) aufweist, welche orthogonal zu der ersten Achse (A) ist und ausgebildet, um über eine korrespondierende weitere Fläche (58) der weiteren Führung (58??) einer weiteren Schneidvorrichtung (6, 4) zu gleiten, um ein Beeinflussen zwischen den Schneidflächen (12) der Schneidvorrichtung (4, 6) und der weiteren Schneidvorrichtung (6, 4) zu verhindern;
**dass** das Schneidelement (11) sich symmetrisch um die erste Achse (A) erstreckt und aufweist:
- eine Platte (35), welche sich um eine weitere Achse, die parallel zu der ersten Achse (A) ist, erstreckt;
- ein Paar von Kopfflächen (34), welche von dem axialen Ende der Platte (35) entlang der ersten Achse (A) hervorstehen, die voneinander entlang der zweiten Achse (X) beabstandet sind; wobei die zweite Achse (X) orthogonal zur ersten Achse (A) ist und
- **dass** sich die Schneidfläche (12) zwischen den Kopfflächen (34) erstreckt und von der Platte (35) in Richtung der ersten Wand (20) hervorsteht;
wobei die Platte (35) aufweist fortsetzend radial zu der ersten Achse (A) und auf der gegensätzlichen radialen Richtung zu der ersten Achse (A):
- einen Ring (36), der orthogonal zu der ersten Achse (A) ist und ein axiales Ende der Schneidfläche (12) definiert;
- eine Kante (37) geneigt in Bezug auf die erste Achse (A);
- eine zusätzliche Flache (38), die orthogonal zu der ersten Achse (A) ist; und
- wobei die radiale externe Fläche (39) orthogonal zu der ersten Achse (A) ist.

2. Schneidvorrichtung nach Anspruch 1,
**dadurch gekennzeichnet,**
**dass** die Klammer (50) an den Rahmen (10) geschraubt ist.

3. Schneidvorrichtung nach Anspruch 1 oder 2,
**dadurch gekennzeichnet,**
**dass** sie mindestens drei Klammern (50) aufweist, welche winkelmäßig mit gleichem Abstand um die Achse (A) angeordnet sind.

4. Schneidvorrichtung nach einem der vorangehenden Ansprüche,
**dadurch gekennzeichnet,**
**dass** die zweite Wand (21) einen Sitz (51), der die Klammern (50) aufnimmt, definiert.

5. Schneidvorrichtung nach Anspruch 4,
**dadurch gekennzeichnet,**
**dass** der Sitz (51) eine Länge hat, welche geringer als die des Rahmens (10) parallel zu der ersten Achse (A) ist.

6. Schneidvorrichtung nach einem der vorangehenden Ansprüche,
**dadurch gekennzeichnet,**
**dass** der Rahmen (10) eine Kammer (15) definiert, welche mit einem Kühlfluid befüllbar ist und die thermisch mit der Schneidfläche (12) zum Entfernen von Wärme von der Schneidfläche (12) gekoppelt ist;
**dass** die Kammer (15) sich zwischen der zweiten Wand (21) und einer dritten Wand (16) radial außerhalb des Rahmens (10) erstreckt,
**dass** die Sitze (51) in Bezug auf die Kammer (15) radial außen angeordnet sind.

7. Schneidvorrichtung nach Anspruch 6,
**dadurch gekennzeichnet,**
**dass** die dritte Wand (16) bogenförmig ist, und sich auf der gegenüberliegenden Seite des ersten Sitzes (13) in Bezug auf die Schneidfläche (12) und entlang einer dritten Achse (Y) erstreckt und dass sie sich parallel zu der Schneidfläche (12) in einem Bereich entlang der ersten Achse (A) quer zur dritten Achse (Y) erstreckt; wobei die dritte Achse (Y) orthogonal zu der ersten und der zweiten Achse (A, X) ist.

8. Schneidvorrichtung nach einem der vorangehenden Ansprüche,
**dadurch gekennzeichnet,**
**dass** der Rahmen (10) eine vierte Wand (24) aufweist, welche in einer Ebene orthogonal zu der dritten Achse (Y) liegt und eine fünfte Wand (25) aufweist, welche in einer Ebene orthogonal zu der dritten Achse (Y) und gegenüber der vierten Wand (24) liegt, aufweist;
wobei jede Führung (55) aufweist fortsetzend parallel zu der dritten Achse (Y) von der vierten Wand (24) des Rahmens (10) zu der fünften Wand (25):-
- eine erste Endfläche (57), die in Bezug auf eine Ebene orthogonal zu der ersten Achse (A) geneigt ist,
- eine Hauptfläche (58), und
- eine zweite Endfläche (59), die in Bezug auf die Ebene orthogonal zu der ersten Achse (A) geneigt ist.

9. Anordnung (1) zum Schneiden einer Stange (2) aufweisend eine erste Schneidvorrichtung (4) und eine zweite Schneidvorrichtung (6) nach einem der vorangehenden Ansprüche;
wobei die erste Schneidvorrichtung (4) und die zweite Schneidvorrichtung (6) beweglich relativ zueinander entlang der dritten Achse (Y) sind und auf gegenüberliegenden Seiten der ersten Achse (A) angeordnet sind entlang der sich in Benutzung die Stange (2) vorgeschoben wird;
wobei die erste Schneidvorrichtung (4) und die zweite Schneidvorrichtung (6) versetzt parallel zu der ersten Achse (A) sind.

## Revendications

1. Un dispositif de coupe (4, 6) pour couper à chaud une tige (2), de préférence une tige (2) en acier, comprenant :
- un cadre (10) ;
- un élément de coupe (11), qui est adapté audit cadre (10), comprend une surface de coupe en forme d'arc (12) s'étendant autour d'un premier axe (A), est adapté, en utilisation, à couper ladite tige (2), et définit un siège ouvert (13) lié par ladite surface de coupe (12) ; et
- des moyens de connexion amovibles (18) pour connecter de manière amovible ledit élément de coupe (11) et ledit cadre (10) ; lesdits moyens de connexion (18) étant également connectés de manière amovible audit cadre (10) ;
ledit élément de coupe (11) comprenant une surface externe radiale (39) et ledit cadre (10) étant lié par une première et une seconde paroi (20, 21) qui sont opposées l'une à l'autre et reposent sur des plans respectifs orthogonaux audit premier axe (A) ;
**caractérisé en ce que** ledit élément de coupe (11) est attaché axialement entre lesdits moyens de connexion (18) et ledit cadre (10) le long dudit premier axe (A) ;
lesdits moyens de connexion (18) comprenant au moins une patte de fixation (50) ; ladite seconde paroi (21) délimitant axialement ledit cadre (10) sur le côté dudit élément de coupe (11) ; ladite surface externe radiale (39) étant attachée axialement entre ladite seconde paroi (21) et ladite au moins une patte de fixation (50) le long dudit premier axe (A) ;
ledit dispositif de coupe (4, 6) comprenant en outre une paire de guides (55) qui s'étendent espacés l'un de l'autre ;
lesdits guides (55) étant montés de manière amovible sur les côtés respectifs de ladite seconde paroi (21) ;
chacun desdits guides (55) comprenant une surface principale relative (58), qui est orthogonale audit premier axe (A) et est adapté pour glisser sur une autre surface correspondante (58) d'un autre guide (58) d'un autre dispositif de coupe (6, 4), de manière à éviter l'interférence entre les surfaces de coupe (12) dudit dispositif de coupe (4, 6) et ledit autre dispositif de coupe (6, 4) ;
ledit élément de coupe (11) s'étendant symétriquement autour dudit premier axe (A) et comprenant :
- un disque (35), qui s'étend autour d'un autre axe parallèle audit premier axe A ;
- une paire de surfaces de tête (34), qui font saillie d'une extrémité axiale dudit disque (35) le long dudit premier axe (A), sont espacées l'une de l'autre le long dudit deuxième axe (X) ; ledit deuxième axe (X) étant orthogonal audit premier axe (A) et
- ladite surface de coupe (12), qui s'étend entre lesdites surfaces de tête (34) et fait saillie dudit disque (35) vers ladite première paroi (20) ;
ledit disque (35) comprenant, en procédant radialement audit premier axe (A) et dans la direction radiale opposée audit premier axe (A):
- un anneau (36) orthogonal audit premier axe (A) et définissant une extrémité axiale de ladite surface de coupe (12);
- un bord (37) incliné par rapport audit premier axe (A) ;
- une surface supplémentaire (38) orthogonale audit premier axe (A) ; et
- ladite surface radiale externe (39) orthogonale audit premier axe (A).

2. Dispositif de coupe selon la revendication 1, **caractérisé en ce que** ladite patte de fixation (50) est vissée audit cadre (10).

3. Dispositif de coupe selon la revendication 1 ou 2, **caractérisé en ce qu'**il comprend au moins trois pattes de fixation (50), qui sont angulairement équidistantes autour dudit premier axe (A).

4. Dispositif de coupe selon l'une quelconque des revendications précédentes, **caractérisé en ce que** ladite seconde paroi (21) définit une assise (51) dans laquelle est logée ladite patte de fixation (50).

5. Dispositif de coupe selon la revendication 4, **caractérisé en ce que** ladite assise (51) a une longueur plus petite que ledit cadre (10) parallèle audit premier axe (A).

6. Dispositif de coupe selon l'une quelconque des revendications précédentes, **caractérisé en ce que** ledit cadre (10) définit une chambre (15), qui peut être remplie avec un fluide réfrigérant et est couplée thermiquement à ladite surface de coupe (12) pour éliminer la chaleur de ladite surface de coupe (12) ;
ladite chambre (15) s'étendant entre ladite deuxième paroi (21) et une troisième paroi (16) radialement extérieure audit cadre (10) ; lesdites assises (51) étant disposées radialement à l'extérieur par rapport à ladite chambre (15).

7. Dispositif de coupe selon la revendication 6, **caractérisé en ce que** ladite troisième paroi (16) est en forme d'arc, s'étend sur le côté opposé de ladite assise (13) par rapport à ladite surface de coupe (12) et le long d'un troisième axe (Y), et s'étend parallèlement à ladite surface de coupe (12) dans une section prise le long dudit premier axe (A) transversal audit troisième axe (Y) ; ledit troisième axe (Y) étant orthogonal auxdits premier, deuxième axes (A, X).

8. Dispositif de coupe selon l'une quelconque des revendications précédentes, **caractérisé en ce que** ledit cadre (10) comprend une quatrième paroi (24) qui se trouve sur un plan orthogonal audit troisième axe (Y), et une cinquième paroi (25) qui se trouve sur un plan orthogonal audit troisième axe (Y) et est opposé à ladite quatrième paroi (24) ;
chacun desdits guides (55) comprenant, en procédant parallèlement audit troisième axe (Y), de ladite quatrième paroi (24) dudit cadre (10) à ladite cinquième paroi (25):
- une première surface d'extrémité (57) inclinée par rapport à un plan orthogonal audit premier axe (A) ;
- ladite surface principale (58) ; et
- une seconde surface d'extrémité (59) inclinée par rapport audit plan orthogonal audit premier axe (A).

9. Ensemble (1) pour couper une tige (2) comprenant un premier dispositif de coupe (4) et un deuxième dispositif de coupe (6) selon l'une quelconque des revendications précédentes; ledit premier dispositif de coupe (4) et ledit deuxième dispositif de coupe (6) étant mobiles l'un par rapport à l'autre le long dudit troisième axe (Y) et étant agencés du côté opposé dudit premier axe (A) le long duquel ladite tige (2) avance, en fonctionnement ;
ledit premier dispositif de coupe (4) et ledit deuxième dispositif de coupe (6) étant décalés parallèlement audit premier axe (A).
